(19) Europäisches Patentamt
European Patent Office
Office européen des brevets

(11) Publication number: **0 490 247 A1**

# EUROPEAN PATENT APPLICATION

(21) Application number: **91120793.4**

(22) Date of filing: **04.12.91**

(51) Int. Cl.5: **B60C 13/00**, G09F 3/00

(30) Priority: **10.12.90 US 624821**

(43) Date of publication of application:
**17.06.92 Bulletin 92/25**

(84) Designated Contracting States:
**DE FR GB IT NL**

(71) Applicant: **The Uniroyal Goodrich Tire Company**
**600 South Main Street**
**Akron Ohio 44397-0001(US)**

(72) Inventor: **Makris, Aristides E.**
**1709 State Road**
**Cuyahoga Falls, Ohio 44223(US)**

(74) Representative: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Character for a tire.**

(57) A tire comprising an annular bead portion and an annular sidewall portion connected at a first end to the bead portion. The sidewall portion is adapted to extend radially of the bead portion when the tire is properly mounted. At least one character is located on the sidewall portion. The character has a leg portion defined by at least a pair of substantially planar surfaces extending at an acute angle relative to the sidewall portion.

Fig.1

## BACKGROUND OF THE INVENTION

### Technical Field

The present invention relates generally to identifying characters formed in an elastomeric article. In particular, the present invention relates to stylized identifying characters having a "beveled" cross-sectional configuration which are molded into a sidewall of a tire.

### Background Art

It is known that tire manufacturers mold identifying characters into a non-tread portion of a tire. The identifying characters typically include letters, numbers, graphic symbols or the like which are molded into at least one of the sidewalls of a tire. In an attempt to make the identifying characters more visible, visually-appealing and distinctive, the tire manufacturers have taken several approaches.

One known approach to distinguish the appearance of an identifying character relative to the remaining sidewall portion of the tire is to make the character from a contrasting color. For example, white letters are painted on or molded into the tire from a white rubber compound. While this approach generally accomplishes the goal of contrasting the characters with the sidewall of the tire, several drawbacks exist. For example, the use of a white rubber compound or paint does not stay clean and bright throughout the normal operating life of the tire. It is also known that the white rubber compound does not have the same mechanical properties of the black rubber compound used in the sidewall of the tire. Furthermore, a tire including such "raised white letters" is more difficult and costly to produce.

Other approaches at contrasting the identifying characters from the sidewall of the tire include those disclosed in U.S. Patent Nos. 4,198,774; 4,444,713 and 4,823,856. The approaches disclosed in these patents include using serrations outlining the identifying character, locating serrations within the boundaries of the identifying character or surrounding the character with a comparatively roughened surface. While the serrations or roughened surface contrast the identifying character with the rest of the sidewall portion of the tire, some drawbacks exist. For example, the serrations or roughened surface may collect dirt and may be difficult to completely clean.

## SUMMARY OF THE INVENTION

The present invention is directed to a tire with an identifying character which does not suffer from the drawbacks referred to above. The tire is rotatable about a longitudinal central axis. The tire includes a pair of axially spaced apart annular bead portions. The tire also includes a pair of axially spaced apart annular sidewall portions. Each one of the annular sidewall portions is connected at a first radial end to a respective bead portion. The sidewall portions are adapted to extend in a direction substantially radially outward of the respective bead portions when the tire is properly mounted. A tread portion interconnects a second radial end of each of the sidewall portions. At least one identifying character is located on a sidewall portion. The character has a leg portion defined by at least a pair of surfaces extending at an acute angle relative to the sidewall portion.

Preferably, each of the pair of surfaces in the leg portion is planar. The acute angle preferably is in the range of about 5° to about 25°. The identifying character and the sidewall portion are integrally formed as one piece from a substantially homogeneous elastomeric material.

## BRIEF DESCRIPTION OF DRAWINGS

Further features of the present invention will become apparent to those skilled in the art to which the present invention relates from reading the following specification with reference to the accompanying drawings, in which:

Fig. 1 is a side view of a tire having identifying characters embodying the present invention;

Figs. 2 and 3 are enlarged views of characters according to one embodiment of the present invention;

Fig. 4 is a cross-sectional view of the character illustrated in Fig. 3, taken approximately along line 4-4 in Fig. 3;

Figs. 5, 6, 8, 9, 11 and 12 are views similar to Figs. 2 and 3 illustrating alternate embodiments of the present invention; and

Figs. 7, 10 and 13 are cross-sectional views similar to Fig. 4.

## DESCRIPTION OF PREFERRED EMBODIMENTS

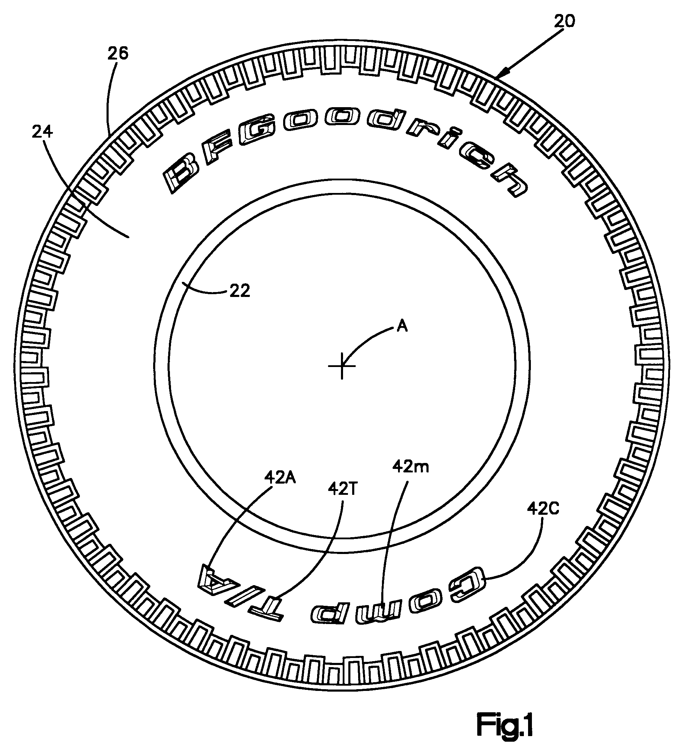

A tire 20 having identifying characters embodying the present invention is illustrated in Fig. 1. The tire 20 is rotatable about a longitudinal central axis A. The tire 20 is to be mounted on a vehicle wheel (not shown).

The tire 20 includes a pair of annular bead portions 22 (only one of which is shown) which are spaced apart along the axis A. Each of the bead portions 22 includes a substantially inextensible bead member (not shown) which is preferably made from steel wire. Each of the bead portions 22 includes elastomeric material encapsulating the bead member.

Elastomeric material as used throughout this specification is intended to refer to any suitable natural rubber, synthetic rubber or combination thereof.

Each of a pair of annular sidewall portions 24 (only one of which is shown) is attached at a radial inner end to a respective bead portion 22. Each sidewall portion 24 is adapted to extend substantially radially outward from the bead portion 22 when the tire 20 is properly mounted and inflated on the vehicle wheel. A tread portion 26 connects radial outer ends of the pair of sidewall portions 24. The tread portion 26 extends in a substantially axial direction parallel to the axis A. The tire 20 also comprises at least one fiber reinforced carcass ply and an innerliner, as is known. The sidewall portions, tread, carcass ply and innerliner all include various suitable elastomeric materials.

The tire 20 further includes a plurality of identifying characters 42A, 42T, 42m and 42C arranged in an annular array on at least one of the sidewall portions 24. Each of the identifying characters 42 has a stylized "beveled" configuration as will be described hereinbelow. The identifying characters 42 include any letter, numeral, visual graphic symbol or the like. The identifying characters 42 illustrated in Fig. 1 spell the words BFGoodrich® Comp T/A®. BFGoodrich Comp T/A is illustrated in an annular array with the bottoms of the identifying characters 42 located radially innermost. It will be apparent, however, that any combination, arrangement or orientation of the identifying characters 42 may be embodied by the present invention. Each of the identifying characters 42 is integrally molded with the sidewall portion 24 of the tire 20 as one piece from a substantially homogeneous elastomeric material. Each of the identifying characters 42 is formed when the tire 20 is shaped and cured in a tire mold.

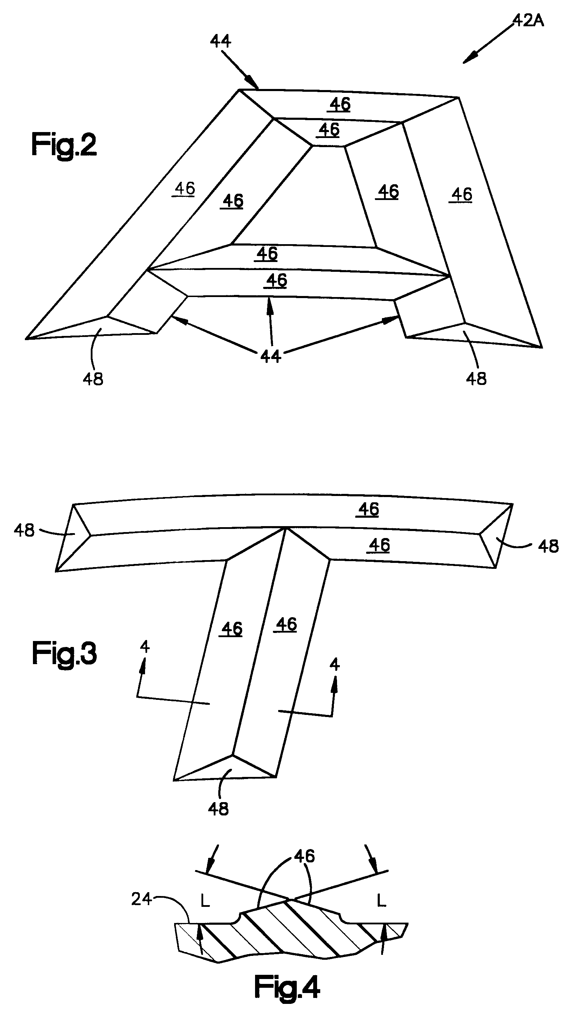

Referring to Figs. 2 and 3, the identifying characters "A" 42A and "T" 42T are illustrated. Each of the identifying characters 42A, 42T is formed from leg portions 44. Each of the leg portions 44 includes a pair of surfaces 46. Each of the surfaces 46 is disposed at an acute angle L (Fig. 4) relative to the sidewall portion 24 of the tire 20. The acute angle L is preferably in the range from about 5° to 25°.

It will be apparent that the sidewall portion 24 of the tire 20 does not necessarily define a planar surface. For example, it is well known that the sidewall portion 24 of the tire 20 is substantially convex on its exterior surface when the tire is properly mounted on a vehicle wheel and inflated. Thus, it is intended that the acute angle L is located relative to the sidewall portion immediately adjacent the character when viewed in cross-section taken in a plane approximately along the line 4-4 as in Fig. 3.

Preferably, each of the surfaces 46 is planar. However, it will be apparent that convex or concave surfaces may also be substituted for the planar surface. In the event that concave or convex surfaces are used, the end points of those surfaces, as viewed in cross-section similar to Fig. 4, will be connectable by a straight line which is disposed at the acute angle L.

The identifying character 42 also includes end surfaces 48. These end surfaces 48 are preferably planar and disposed at an acute angle relative to the sidewall portion 24 of the tire 20. The surfaces 46,48 are preferably located axially outward from the sidewall portion 24. However, it will be apparent that the surfaces 46,48 could be located axially inward of the sidewall portion 24.

While the identifying character "T" 42T is described in detail it will be apparent that the same explanation will hold for any other letter, numeral or visual graphic symbol. For example, in Fig. 2, the character "A" 42A is described. The character "A" 42A is made up of four leg portions 44 whereas the character T comprises only two leg portions 44.

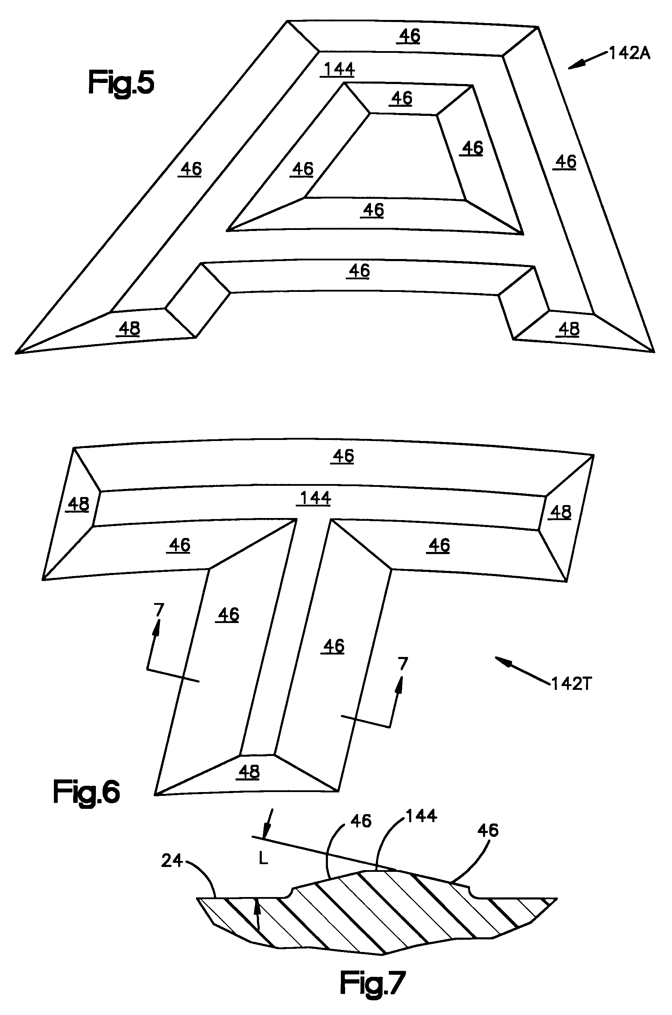

An alternate embodiment of the present invention, is illustrated in Figs. 5-7. The identifying character has been modified slightly from the embodiment illustrated in Figs. 2-4. For example, an identifying character "A" 142A (Fig. 5) and an identifying character "T" 142T (Fig. 6) are illustrated. The character 142T still includes the surfaces 46 disposed at the acute angle L (Fig. 7) and the end surfaces 48 as described above and illustrated in Figs. 2-4.

However, the surfaces 46 are separated by another intermediate surface 144. The intermediate surface 144 preferably extends in a direction which is substantially parallel to and spaced axially outward from the corresponding sidewall portion 24 of the tire 20. This modified identifying character 142A, 142T appears somewhat bolder than the characters 42A, 42T since it is wider but still deflects light from the angled surfaces 46.

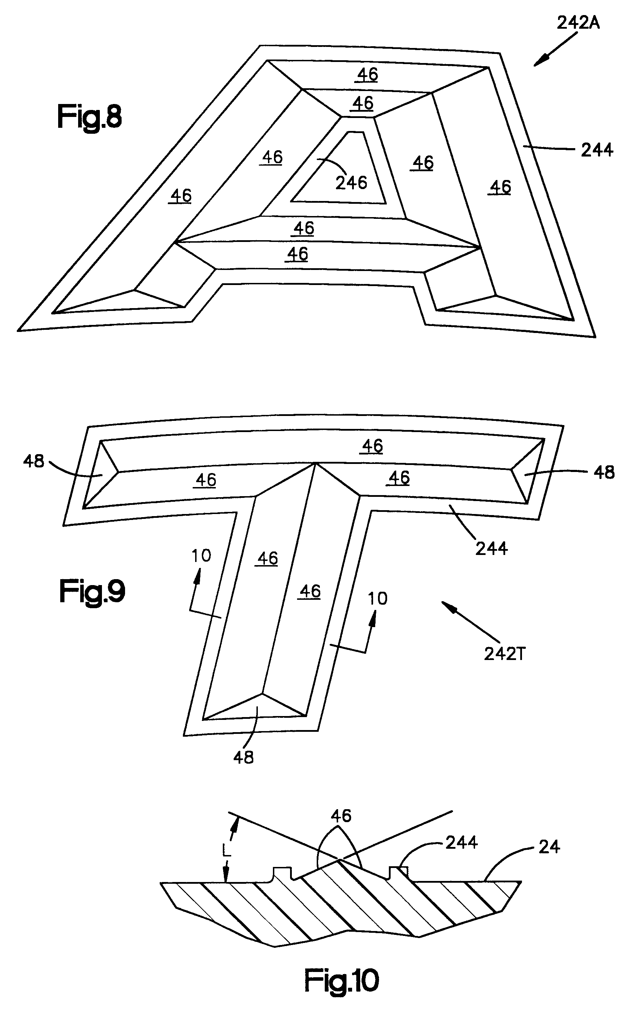

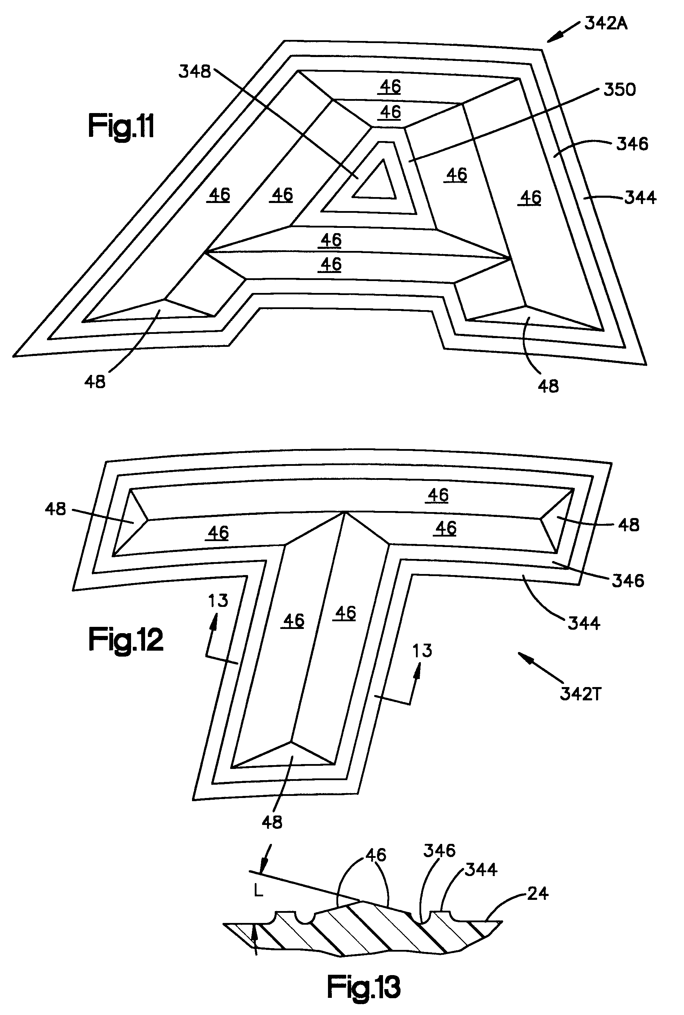

Referring to Figs. 8-10, yet another embodiment of the present invention is illustrated. For example, in Fig. 8 an identifying character "A" 242A and in Fig. 9 an identifying character "T" 242T are illustrated. The character 242T (Fig. 9) includes surfaces 46 and 48 which cooperate in a manner identical to the character 42T illustrated in Fig. 3 and described above. However, the character 242T also includes an additional surface 244 (Figs. 9 and 10). The surface 244 is substantially planar and extends in a direction substantially parallel to the sidewall portion 24 of the tire 20.

The surface 244 is located between the sidewall portion 24 and one of the surfaces 46. The surface 244, thus, substantially forms a narrow outline of the character 242T. The surface 244 is located axially outward of the sidewall portion 24, as viewed in Fig. 10. However, it will be apparent that the surface 244 could be recessed or located axially inward of the sidewall portion 24.

The character 242A (Fig. 8) includes another substantially planar surface 246. The surface 246 is similar to the outline surface 244 but is located completely within the enclosed center of the "A".

Referring to Figs. 11-13, still another embodiment of the present invention is illustrated. For example, in Fig. 11 an identifying character "A" 342A and in Fig. 12 an identifying character "T" 342T are illustrated. The character 342T (Fig. 12) still includes the surfaces 46 and 48 as described above for character 42T and illustrated in Fig. 3.

The character 342T further includes the improvement of a substantially planar surface 344 which again acts as an outline of the character. The surface 344 is substantially planar when viewed in cross-section in Fig. 13. The surface 344 is spaced axially outward of the sidewall portion 24 of the tire 20. The surface 344 extends in a direction substantially parallel to the sidewall portion 24.

The character 342T further includes a surface 346 located between the surface 344 and surface 46 of the character. The surface 346 is substantially a U-shaped groove which further outlines the character. This surface 346 further enhances the contrast of the character 342T against the sidewall portion 24 of the tire 20. The character 342A (Fig. 11) also includes a planar surface 348 and U-shaped surface 350. The surfaces 348,350 are located completely within the enclosed center of the "A".

It is understood that when the words "substantially parallel" are used throughout this specification that they mean parallel to the sidewall portion 24 in an area immediately adjacent the identifying character when viewed in cross-section. This recognizes that the sidewall portion is curved over its radial location away from the axis A.

From the above description of preferred embodiments of the invention, those skilled in the art will perceive improvements, changes and modifications. Such improvements, changes and modifications within the skill of the art are intended to be covered by the appended claims.

## Claims

1. A tire rotatable about a longitudinal central axis, said tire comprising:

a pair of axially spaced apart bead portions;

a pair of axially spaced sidewall portions, each of said sidewall portions being connected at a first end to a respective bead portion and adapted to extend in a direction substantially radially of said bead portion when the tire is properly mounted;

a tread portion connecting a second end of each of said sidewall portions; and

at least one character located on one of said sidewall portions, said character having a leg portion defined by at least a pair of surfaces extending at an acute angle relative to said sidewall portion.

2. The tire set forth in claim 1 wherein said acute angle is in the range of about 5° to about 25°.

3. The tire set forth in claim 1 wherein said surfaces are located axially outward of said sidewall portion.

4. The tire set forth in claim 1 further including a third surface located between said pair of surfaces and extending in a direction substantially parallel to said sidewall portion.

5. The tire set forth in claim 1 further including another surface located between said sidewall portion and one of said pair of surfaces and axially spaced from said sidewall portion, said another surface extending in a direction substantially parallel to said sidewall portion.

6. The tire set forth in claim 5 wherein said another surface is located axially outward of said sidewall portion.

7. The tire set forth in claim 5 further including surface means defining a groove located between one of said pair of surfaces and said another surface.

8. The tire set forth in claim 7 wherein said groove is substantially U-shaped.

9. The tire set forth in claim 1 wherein each of said pair of surfaces is substantially planar.

10. A tire comprising:

an annular bead portion;

an annular sidewall portion connected at a first end to said bead portion and adapted to extend radially of said bead portion when the tire is properly mounted;

at least one character located on said sidewall portion, said character having a leg portion defined by at least a pair of substantially planar surfaces extending at an acute angle relative to said sidewall portion.

11. The tire set forth in claim 10 wherein said acute angle is in the range of about 5° to about 25°.

12. The tire set forth in claim 10 wherein said planar surfaces are located axially outward of said sidewall portion.

13. The tire set forth in claim 10 further including a third planar surface located between said pair of planar surfaces and extending in a direction substantially parallel to said sidewall portion.

14. The tire set forth in claim 10 further including another planar surface located between said sidewall portion and one of said pair of planar surfaces and axially spaced from said sidewall portion, said another planar surface extending in a direction substantially parallel to said sidewall portion.

15. The tire set forth in claim 14 wherein said another planar surface is located axially outward of said sidewall portion.

16. The tire set forth in claim 14 further including surface means defining a groove located between said one planar surface and said another planar surface.

17. The tire set forth in claim 16 wherein said groove is substantially U-shaped.

18. The tire set forth in claim 10 wherein said character and said sidewall portion are integrally formed as one piece from a substantially homogeneous material.

Fig.1

**Fig.2**

42A

44

46
46
46
46
46
46
46
46
46
44

48
48

**Fig.3**

46
46
46
48
48
46
46
4
4

48

**Fig.4**

46
24
L
L

EP 0 490 247 A1

Fig.5

46

144

46

46

46

46

46

46

142A

46

48

48

46

48

144

48

46

46

46

7

46

46

7

142T

48

Fig.6

46

144

46

L

24

Fig.7

8

Fig.8

Fig.9

Fig.10

Fig.11

Fig.12

Fig.13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-2 008 062 (THE GOODYEAR TIRE&RUBBER CO.) | 1-3, 5-12, 15-18 | B60C13/00 G09F3/00 |
| | * claims; figures * | | |
| D | & US-A-4 198 774 | | |
| | --- | | |
| A | FR-A-2 371 307 (EUTECO S.P.A.) | 1-3, 10-12 | |
| | * claims 1-5,8; figures * | | |
| | --- | | |
| A | EP-A-0 213 477 (THE FIRESTONE TIRE&RUBBER CO) | 1-3, 10-12 | |
| | * claims; figures * | | |
| | ----- | | |
| | | | **TECHNICAL FIELDS SEARCHED (Int. Cl.5 )** |
| | | | B60C G09F B290 |

The present search report has been drawn up for all claims

| Place of search | Date of completion of the search | Examiner |
|---|---|---|
| THE HAGUE | 12 MARCH 1992 | BARADAT J.L. |